(19) Europäisches Patentamt
European Patent Office
Office européen des brevets

(11) **EP 4 453 115 B1**

(12) **EUROPEAN PATENT SPECIFICATION**


(45) Date of publication and mention of the grant of the patent:
**01.10.2025 Bulletin 2025/40**

(21) Application number: **21843875.2**

(22) Date of filing: **23.12.2021**

(51) International Patent Classification (IPC):
***C09D 175/04*** *(2006.01)* ***C08G 18/40*** *(2006.01)*
***C08G 18/79*** *(2006.01)* ***C08G 18/48*** *(2006.01)*
***C08G 18/62*** *(2006.01)* ***C08L 75/04*** *(2006.01)*

(52) Cooperative Patent Classification (CPC):
(C-Sets available)
**C09D 175/04; C08G 18/4063; C08G 18/4829; C08G 18/4837; C08G 18/6254; C08G 18/6291; C08G 18/792; C08L 75/04** (Cont.)

(86) International application number:
**PCT/CN2021/140728**

(87) International publication number:
**WO 2023/115442 (29.06.2023 Gazette 2023/26)**


(54) **TWO-COMPONENT POLYURETHANE COMPOSITION**

ZWEI-KOMPONENTEN POLYURETHANZUSAMMENSETZUNG

COMPOSITION DE POLYURÉTHANE À DEUX COMPOSANTS


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.10.2024 Bulletin 2024/44**



(73) Proprietor: **Dow Global Technologies LLC**
**Midland, MI 48674 (US)**

(72) Inventors:
- **LIN, Daoshu**
**Shanghai 201203 (CN)**
- **SHEN, Cheng**
**Shanghai 201203 (CN)**
- **LI, Yan**
**Shanghai 201104 (CN)**
- **TANG, Jia**
**Shanghai 201203 (CN)**

(74) Representative: **Beck Greener LLP**
**Fulwood House**
**12 Fulwood Place**
**London WC1V 6HR (GB)**



(56) References cited:
**WO-A1-2021/081732** **US-A- 5 308 912**
**US-A1- 2006 155 095**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 175/04, C08K 3/28, C08K 3/22**

## Description

FIELD

The present invention relates to a two-component polyurethane composition and a process for preparing the same. The invention is set out in the appended set of claims.

INTRODUCTION

Water-borne two-component polyurethane compositions are increasingly used in the coating industry as they contribute zero or less volatile organic compounds (VOCs) as compared to solvent-borne polyurethane compositions. Two-component water-borne polyurethane compositions may provide coatings with acceptable appearance (such as gloss and fullness) and mechanical properties similar to solvent-borne polyurethane compositions, but yet fail to provide sufficiently long pot life as indicated by foaming issues and/or coatings' gloss loss after storage. Incorporation of isocyanates with hydrophilic modification ("hydrophilic isocyanates") into two-component polyurethane coating compositions may extend pot life due to better dispersion in water than non-modified polyisocyanates. However, many customers prefer to use non-modified isocyanates for better chemical and water resistance properties, greater bubble-free film thickness, and lower cost as compared to hydrophilic isocyanates.

WO2021/081732 discloses a two-component polyurethane composition comprising (A) an aqueous dispersion comprising an emulsion polymer and from 2 to 20% of an alcohol alkoxylate by weight based on the weight of the emulsion polymer and (B) a polyisocyanate.

Therefore, there remains a need to provide a waterborne two-component polyurethane composition with extended pot life without compromising other properties such as appearance.

SUMMARY

The present invention provides a waterborne two-component polyurethane composition by combining a hydroxyl group-containing acrylic emulsion polymer and a specific branched polyether polyol with a polyisocyanate, particularly suitable for coatings. The polyurethane composition of the present invention has excellent pot life, as indicated by a 60 degree (°) gloss of higher than 75 after storage at 35 degree Celsius (°C) for 3 hours, while providing acceptable initial gloss and distinctness of image (DOI). These properties can be determined according to the test methods described in the Examples section below.

In a first aspect, the present invention is a two-component polyurethane composition comprising:

(A) an aqueous dispersion comprising:

a hydroxyl group-containing acrylic emulsion polymer comprising, by weight based on the weight of the hydroxyl group-containing acrylic emulsion polymer, from 10% to 50% of structural units of a hydroxy-functional alkyl (meth)acrylate; and

from 2% to 20%, by weight based on the weight of the hydroxyl group-containing acrylic emulsion polymer, of a branched polyether polyol; wherein the branched polyether polyol has a hydroxyl functionality of from 4 to 10 and a molecular weight per branch of from 1200 to 2500 grams per mole, and contains from 20% to 40% of ethylene oxide units, by weight based on the weight of the branched polyether polyol; and

(B) a polyisocyanate.

In a second aspect, the present invention is a process for preparing the two-component polyurethane composition of the first aspect. The process comprises admixing the aqueous dispersion (A) with the polyisocyanate (B).

DETAILED DESCRIPTION

Test methods refer to the most recent test method as of the priority date of this document when a date is not indicated with the test method number. References to test methods contain both a reference to the testing society and the test method number. The following test method abbreviations and identifiers apply herein: ASTM refers to ASTM International methods.

Products identified by their tradename refer to the compositions available under those tradenames on the priority date of this document. "And/or" means "and, or as an alternative". All ranges include endpoints unless otherwise indicated.

"Aqueous" dispersion herein means that particles dispersed in an aqueous medium. By "aqueous medium"

herein is meant water and from zero to 30%, by weight based on the weight of the medium, of water-miscible compound(s) such as, for example, alcohols, glycols, glycol ethers, glycol esters, or mixtures thereof.

"Structural units", also known as "polymerized units", of the named monomer, refers to the remnant of the monomer after polymerization, that is, polymerized monomer or the monomer in polymerized form. For example, a structural unit of methyl methacrylate is as illustrated:

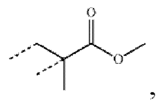

,

where the dotted lines represent the points of attachment of the structural unit to the polymer backbone.

"Acrylic emulsion polymer" herein refers to an emulsion homopolymer of an acrylic monomer or an emulsion copolymer of an acrylic monomer with a different acrylic monomer or other monomers such as styrene and vinyl acetate. "Acrylic monomer" as used herein includes (meth)acrylic acid, alkyl (meth)acrylate, (meth)acrylamide, (meth)acrylonitrile and their modified forms such as hydroxyalkyl (meth)acrylate. Throughout this document, the word fragment "(meth)acryl" refers to both "methacryl" and "acryl". For example, (meth)acrylic acid refers to both methacrylic acid and acrylic acid, and methyl (meth)acrylate refers to both methyl methacrylate and methyl acrylate.

"Functionality" or "Fn" of a polyol herein refers to the number of hydroxyl (OH) groups per molecule. Functionality (Fn), concentration of ethylene oxide units, propylene oxide units, and butylene oxide units for polyether polyols, and chemical structure of initiators for preparing polyether polyols are determined by standard $^{13}C$ nuclear magnetic resonance (NMR) analysis.

"Branched" polyether polyol herein means a polyether polyol having a functionality > 2.

The two-component polyurethane composition of the present invention typically comprises part A and part B, where the part A comprises an aqueous dispersion comprising a hydroxyl group-containing acrylic emulsion polymer and a branched polyether polyol, and the part B comprises one or more polyisocyanates. The branched polyether polyol may be represented by formula (I),

$$R\text{-}[O\text{-}(AO)_x\text{-}H]_y \qquad (I)$$

where R represents a multivalent aliphatic hydrocarbon radical, each AO is independently selected from an ethylene oxide unit ($-CH_2-CH_2-O-$), a propylene oxide unit ($-CH_2-CH(CH_3)-O-$), a butylene oxide unit ($-CH_2-CH(CH_2CH_3)-O-$), or combinations thereof; provided that the ethylene oxide units are present at a total concentration of from 20% to 40% by weight, based on the weight of the branched polyether polyol;
subscript x refers to a mean of moles of alkylene oxide and can be in a range of 20 to 55; and
subscript y refers to the functionality of the polyether polyol and can be in a range of 4 to 10.

Each AO in formula (I) can be in block or random order. The values for subscript x may be sufficient to provide the branched polyether polyol with the desired molecular weight per branch described below.

"Multivalent" radical includes a quadrivalent or higher-valent radical. R group may be derived from an initiator, that is used in the preparation of the polyether polyol, with 4-10 hydroxyl groups by removing the active hydrogens in the initiator. R can be a saturated hydrocarbon group typically having 4 to 10 carbon atoms. Examples of R groups can be pentaerythrityl, sorbityl, or glycosyl.

Specific examples of the branched polyether polyol have formula (II):

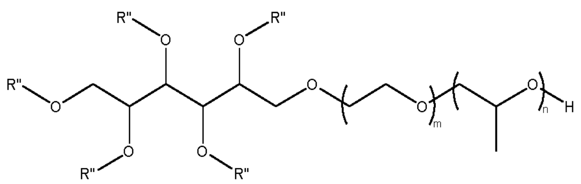

(II),

where R"=

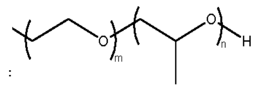

, m is from 5 to 23, and n is from 12 to 35.

The branched polyether polyol useful in the present invention has a functionality (Fn) of 4 or more, and can be 5 or more, or even 6 or more, while at the same time is generally 10 or less, 9 or less, 8 or less, or even 6 or less. Desirably, each branch of the polyether polyol has one hydroxyl group. A mixture of two or more polyether polyols that may differ in functionality, amount of ethylene oxide units, and/or molecular weight per branch can be used. When two or more polyols with different functionalities are used, Fn refers to the average functionality of these polyols. For example, for a mixture of 1 mole of a polyol with Fn=6 with 2 moles of a polyol with Fn=4, the average functionality

$$= (1*6+2*4) / (1+2) = 4.67.$$

The branched polyether polyol useful in the present invention comprises ethylene oxide units ($-(CH_2CH_2-O)-$) at a concentration of 20% or more, and can be 22% or more, 24% or more, 25% or more, 26% or more, 28% or more, 30% or more, 32% or more, or even 35% or more, while at the same time is 40% or less, and can be 39% or less, 38% or less, 37% or less, 36% or less, or even 35% or less, by weight based on the weight of the branched polyether polyol.

The branched polyether polyol useful in the present invention may also comprise propylene oxide units, butylene oxide units, or mixtures thereof; at a concentration of 60% or more, and can be 61% or more, 62% or more, 63% or more, 64% or more, or even 65% or more, while at the same time is generally 80% or less, and can be 78% or less, 76% or less, 75% or less, 74% or less, 72% or less, 70% or less, 68% or less, or even 65% or less, by weight based on the weight of the branched polyether polyol. Desirably, the branched polyether polyol contains, by weight based on the weight of the branched polyether polyol, from 20% to 40% of the ethylene oxide units and from 60% to 80% of the propylene oxide units, and more desirably, from 20% to 35% of the ethylene oxide units and from 65% to 80% of the propylene oxide units.

The branched polyether polyol may have a molecular weight (also as "Total MW") of 4,800 grams per mole (g/mol) or more, and can be 5,000 g/mol or more, 5,200 g/mol or more, 6,200 g/mol, 6,500 g/mol, 7,000 g/mol or more, 8,000 g/mol or more, 9,000 g/mol or more, 10,000 g/mol or more, 11,000 g/mol or more, or even 12,000 g/mol or more, while at the same time is generally 25,000 g/mol or less, and can be 20,000 g/mol or less, 17,500 g/mol or less, 15,000 g/mol or less, or even 12,000 g/mol or less. Molecular weight of the branched polyether polyol can be determined by the following equation:

$$\text{Total MW} = 56100 / (\text{OHV x Fn})$$

where Total Mw represents the molecular weight of the polyol, OHV represents hydroxyl value as determined by ASTM D4274, and Fn represents the functionality of the polyol.

The branched polyether polyol useful in the present invention has a molecular weight per branch of 1,200 g/mol or more, and can be 1,300 g/mol or more, 1,400 g/mol or more, 1,500 g/mol or more, 1,600 g/mol or more, 1,700 g/mol or more, 1,800 g/mol or more, 1,900 g/mol or more, or even 2,000 g/mol or more, while at the same time is 2,500 g/mol or less, 2,400 g/mol or less, 2,300 g/mol or less, 2,200 g/mol or less, 2,100 g/mol or less, or even 2,000 g/mol or less. Molecular weight per branch (also as "Mw per branch") can be determined as

$$\text{Mw per branch} = [\text{Total MW} - \text{MW (initiator)}] / \text{Fn}$$

where Total MW and Fn are as defined above, MW(initiator) represents the molecular weight of the initiator used for preparing the polyol. MW(initiator) can be determined based on the initiator's structure characterized by $^{13}$C NMR analysis.

The branched polyether polyol useful in the present invention can be obtained in conventional manners by reacting alkylene oxides, such as ethylene oxide, propylene oxide, butylene oxide, or combinations thereof, with an initiator in the presence of a catalyst for ring-opening polymerization of alkylene oxides. Polymerization can be bulk polymerization or solution polymerization. The initiator may have 4 to 10 active hydrogen atoms for preparing the branched polyether polyols with hydroxyl functionalities in a range of 4 to 10. Examples of suitable initiators include pentaerythritol, sorbitol, glycose, or mixtures thereof. The catalyst useful for polymerization of alkylene oxides can be either anionic or cationic, including, for example, KOH, boron trifluoride, or double cyanide complex (DMC) catalysts such as zinc hexacyanocobaltate. The alkylene oxides are typically fed into a reactor containing dried initiator and the catalyst at temperatures varying from 50 to 140 °C. When the pressure in the reactor returns to approximately the same pressure before feeding the alkylene oxides, the polymerization is usually considered complete.

The branched polyether polyol useful in the present invention is present at a concentration of 2% or more, and can be 2.1% or more, 2.2% or more, 2.3% or more, 2.4% or more, 2.5% or more, 3% or more, 3.5% or more, 4% or more, 4.5% or more, 5% or more, 5.5% or more, 6% or more, 6.5% or more, 7% or more, 7.5% or more, 8% or more, 8.5% or more, 9% or more, 9.5% or more, or even 10% or more, while at the same time is 20% or less, and can be 19% or less, 18% or less, 17% or less, 16% or less, 15% or less, 14.5% or less, 14% or less, 13.5% or less, 13% or less, 12.5% or less, 12% or less,

11.5% or less, 11% or less, or even 10.5% or less, by weight based on the weight of the hydroxyl group-containing acrylic emulsion polymer. "Weight of the hydroxyl group-containing acrylic emulsion polymer" refers to the dry weight of the acrylic emulsion polymer.

The aqueous dispersion (A) in the polyurethane composition comprises one or more hydroxyl group-containing acrylic emulsion polymers. Acrylic emulsion polymers are typically present in the form of an aqueous dispersion that is synthesized by emulsion polymerization (also as "primary dispersion"). The hydroxyl group-containing acrylic emulsion polymers comprise structural units of one or more hydroxy-functional alkyl (meth)acrylates. Examples of suitable hydroxy-functional alkyl (meth)acrylates include hydroxyethyl (meth)acrylates such as 2-hydroxyethyl acrylate and 2-hydroxyethyl methacrylate; hydroxypropyl (meth)acrylates such as 2-hydroxypropyl acrylate, 2-hydroxypropyl methacrylate, 3-hydroxypropyl acrylate, and 3-hydroxypropyl methacrylate; hydroxybutyl (meth)acrylates such as 3-hydroxybutyl acrylate, 3-hydroxybutyl methacrylate, 4-hydroxybutyl acrylate, and 4-hydroxybutyl methacrylate; 6-hydroxyhexyl acrylate; 6-hydroxyhexylmethacrylate; 3-hydroxy-2-ethylhexyl acrylate; 3-hydroxy-2-ethylhexyl methacrylate; and mixtures thereof. Desirably, the hydroxy-functional alkyl (meth)acrylates include 2-hydroxyethyl acrylate, 2-hydroxyethyl methacrylate, 3-hydroxypropyl acrylate, 3-hydroxypropyl methacrylate, or mixtures thereof. The hydroxyl group-containing acrylic emulsion polymer may comprise structural units of the hydroxy-functional alkyl (meth)acrylate at a concentration of 5% or more, and can be 10% or more, 12% or more, 15% or more, and can be greater than 15%, 17% or more, 20% or more, 23% or more, 25% or more, 27% or more, or even 30% or more, while at the same time is 50% or less, and can be 48% or less, 45% or less, 42% or less, 40% or less, 38% or less, 36% or less, 35% or less, 34% or less, 32% or less, or even 30% or less, by weight based on the weight of the hydroxyl group-containing acrylic emulsion polymer.

The hydroxyl group-containing acrylic emulsion polymer may comprise structural units of one or more acid monomers, salts thereof, or mixtures thereof. The acid monomers may include carboxylic acid monomers, sulfonic acid monomers, phosphorous-containing acid monomers, or mixtures thereof. Examples of suitable phosphorous-containing acid monomers and salts thereof include phosphoalkyl (meth)acrylates such as phosphoethyl (meth)acrylate, phosphopropyl (meth)acrylate, and phosphobutyl (meth)acrylate; salts thereof; or mixtures thereof; $CH_2=C(R_1)-C(O)-O-(R_{20})_q-P(O)(OH)_2$, wherein $R_1$=H or $CH_3$, $R_2$=alkylene, such as an ethylene group, a propylene group, or a combination thereof; and q=1-20, such as SIPOMER PAM-100, SIPOMER PAM-200, SIPOMER PAM-300, SIPOMER PAM-600 and SIPOMER PAM-4000 all available from Solvay; phosphoalkoxy (meth)acrylates such as phospho ethylene glycol (meth)acrylate, phospho di-ethylene glycol (meth)acrylate, phospho triethylene glycol (meth) acrylate, phospho propylene glycol (meth)acrylate, phospho di-propylene glycol (meth)acrylate, or phospho tri-propylene glycol (meth)acrylate; salts thereof; or mixtures thereof. Desirably, the phosphorus-containing acid monomers and salts thereof are selected from phosphoethyl (meth)acrylate, phosphopropyl (meth)acrylate, phosphobutyl (meth)acrylate, or allyl ether phosphate; salts thereof; or mixtures thereof. More desirably, the phosphorus-containing acid monomer is phosphoethyl methacrylate (PEM). The carboxylic acid monomers can be $\alpha$, $\beta$-ethylenically unsaturated carboxylic acids, monomers bearing an acid-forming group which yields or is subsequently convertible to, such an acid group (such as anhydride, (meth)acrylic anhydride, or maleic anhydride); and mixtures thereof. Specific examples of carboxylic acid monomers include acrylic acid, methacrylic acid, maleic acid, itaconic acid, crotonic acid, fumaric acid, 2-carboxyethyl acrylate, and mixtures thereof. The sulfonic acid monomers and salts thereof may include sodium vinyl sulfonate (SVS), sodium styrene sulfonate (SSS), acrylamido-methyl-propane sulfonate (AMPS) or salts thereof; or mixtures thereof. The acid monomer can be a combination of a carboxylic acid monomer and/or a salt thereof with a phosphorous-containing acid monomer and/or a salt thereof. Desirably, the acid monomer is selected from acrylic acid, methacrylic acid, itaconic acid, or phosphoethyl methacrylate; salts thereof; or mixtures thereof. The hydroxyl group-containing acrylic emulsion polymer may comprise structural units of the acid monomers and salts thereof at a centration of 0.1% or more, and can be 0.2% or more, 0.3% or more, 0.5% or more, 0.8% or more, 1.0% or more, 1.3% or more, 1.5% or more, 1.7% or more, 2.0% or more, or even 2.2% or more, while at the same time is generally 10% or less, and can be 8.0% or less, 7.0% or less, 6.0% or less, 5.0% or less, 4.5% or less, 4.0% or less, 3.5% or less, 3.0% or less, or even 2.5% or less, by weight based on the weight of the hydroxyl group-containing acrylic emulsion polymer.

The hydroxyl group-containing acrylic emulsion polymer useful in the present invention may comprise or be free of structural units of one or more ethylenically unsaturated functional monomers (that are other than the monomers described above) carrying at least one functional group selected from an amide, acetoacetate, carbonyl, ureido, silane, or amino group. Suitable ethylenically unsaturated functional monomers may include, for example, amino-functional monomers such as dimethylaminoethyl methacrylate, dimethylaminoethyl acrylate, dimethylaminopropyl methacrylate, dimethylaminopropyl acrylate; ureido-functional monomers such as hydroxyethyl ethylene urea methacrylate, hydroxyethyl ethylene urea acrylate, such as SIPOMER WAM II from Solvay; monomers bearing acetoacetate-functional groups such as acetoacetoxyethyl methacrylate (AAEM), acetoacetoxyethyl acrylate, acetoacetoxypropyl methacrylate, acetoacetoxypropyl acrylate, allyl acetoacetate, acetoacetoxybutyl methacrylate, acetoacetoxybutyl methacrylate, acetoacetamidoethyl methacrylate, acetoacetamidoethyl acrylate; monomers bearing carbonyl-containing groups such as diacetone acrylamide (DAAM), diacetone methacrylamide; monomers bearing amide-functional groups such as acrylamide and methacrylamide; vinyltrialkoxysilanes such as vinyltrimethoxysilane, vinyltriethoxysilane, vinyltris(2-methoxyethoxy)silane, vinyldimethylethoxysilane vinylmethyldiethoxysilane or (meth)acryloxyalkyltrialkoxysilanes such as (meth)acryloxyethyltrimethoxysilane and (meth)acryloxypropyltrimethoxysilane; or mixtures thereof. The hydroxyl group-containing acrylic emulsion polymer may comprise structural units of the ethylenically unsaturated functional monomer at a concentration of zero or more, and can be 0.1% or more, 0.5% or more, 1% or more, or even 2% or more, while at the same time is generally 10% or less, and can be 8% or less, 6% or less, 5% or less, or even 3% or less, by weight based on the weight of the hydroxyl group-containing acrylic emulsion polymer.

The hydroxyl group-containing acrylic emulsion polymer useful in the present invention may comprise structural units of one or more monoethylenically unsaturated nonionic monomers other than the hydroxy-functional alkyl (meth) acrylates and the ethylenically unsaturated functional monomers described above. "Nonionic monomers" herein refers to monomers that do not bear an ionic charge between pH=1-14. The monoethylenically unsaturated nonionic monomer may be selected from a vinyl aromatic monomer, an alkyl (meth)acrylate, an acrylonitrile, or mixtures thereof. Suitable vinyl aromatic monomers may include, for example, styrene; substituted styrene such as methylstyrene, alpha-methylstyrene, trans-beta-methylstyrene, 2,4-dimethylstyrene, ethylstyrene, butylstryene, and p-methoxystyrene; o-, m-, and p-methoxystyrene; and p-trifluoromethylstyrene; or mixtures thereof. The alkyl (meth)acrylates can be $C_1$-$C_{20}$-alkyl, $C_1$-$C_{18}$-alkyl, $C_1$-$C_{12}$-alkyl, or $C_1$-$C_4$-alkyl (meth)acrylates. Specific examples of alkyl (meth)acrylates include methyl acrylate, methyl methacrylate, ethyl acrylate, ethyl methacrylate, butyl acrylate, butyl methacrylate, tert-butyl acrylate, tert-butyl methacrylate, iso-butyl acrylate, iso-butyl methacrylate, 2-ethylhexyl acrylate, nonyl acrylate, decyl acrylate, lauryl acrylate, cyclohexyl methacrylate, cyclohexyl acrylate, tert-butyl cyclohexyl methacrylate, trimethylcyclohexyl methacrylate, isobornyl methacrylate, isobornyl acrylate, tetrahydrofuran methacrylate, dicyclopentadienyl acrylate, dicyclopentadienyl methacrylate, and combinations thereof. Desirably, the monoethylenically unsaturated nonionic monomers include styrene in combination of one or more alkyl (meth)acrylates. Desirably, the monoethylenically unsaturated nonionic monomer is selected from styrene, methyl methacrylate, 2-ethylhexyl acrylate, butyl acrylate, or mixtures thereof. Structural units of the monoethylenically unsaturated nonionic monomer may be present at a concentration of 40% or more, and can be 45% or more, 50% or more, 55% or more, 60% or more, or even 65% or more, while at the same time is generally 94.9% or less, and can be 94.8% or less, 90% or less, 85% or less, 80% or less, 77% or less, 75% or less, 74% or less, 72% or less, or even 70% or less, by weight based on the weight of the hydroxyl group-containing acrylic emulsion polymer.

The hydroxyl group-containing acrylic emulsion polymer useful in the present invention may comprise or be free of structural units of one or more multiethylenically unsaturated monomers including di-, tri-, tetra-, or higher multifunctional ethylenically unsaturated monomers. Examples of suitable multiethylenically unsaturated monomers include butadiene, allyl (meth)acrylate, divinyl benzene, ethylene glycol dimethacrylate, butylene glycol dimethacrylate, and mixtures thereof. Structural units of the multiethylenically unsaturated monomer may be present at a concentration of zero or more, and can be 0.1% or more, or even 0.2% or more, while at the same time is generally 5% or less, and can be 3% or less, 1% or less, can be less than 1%, 0.5% or less, or even zero, by weight based on the weight of the hydroxyl group-containing acrylic emulsion polymer.

Desirably, the hydroxyl group-containing acrylic emulsion polymer useful in the present invention comprises, by weight based on the weight of the hydroxyl group-containing acrylic emulsion polymer, from 5% to 35% of structural units of the hydroxy-functional alkyl (meth)acrylate; from 0.2% to 5% of structural units of the acid monomer, the salt thereof, or mixtures thereof; and from 60% to 94.8% of structural units of the monoethylenically unsaturated nonionic monomer other than the hydroxy-functional alkyl (meth)acrylate.

The hydroxyl group-containing acrylic emulsion polymer useful in the present invention may have a weight average molecular weight of 50,000 g/mol or less, and can be 48,000 g/mol or less, 45,000 g/mol or less, 42,000 g/mol or less, 40,000 g/mol or less, 38,000 g/mol or less, 35,000 g/mol or less, 32,000 g/mol or less, 30,000 g/mol or less, 28,000 g/mol or less, 25,000 g/mol or less, 23,000 g/mol or less, 20,000 g/mol or less, 18,000 g/mol or less, or even 17,000 g/mol or less, while at the same time is generally 3,000 g/mol, and can be 4,000 g/mol or more, 5,000 g/mol or more, 6,000 g/mol or more, 7,000 g/mol or more, 8,000 g/mol or more, 9,000 g/mol or more, 10,000 g/mol or more, 11,000 g/mol or more, 12,000 g/mol or more, 13,000 g/mol or more, 14,000 g/mol or more, 15,000 g/mol or more, or even 16,000 g/mol or more, as determined by Gel Permeation Chromatography (GPC) (further details provided below under GPC Analysis).

Particles of the hydroxyl group-containing acrylic emulsion polymer dispersed in the aqueous dispersion (A) may have a particle size of 30 nanometers (nm) or more, and can be 50 nm or more, 60 nm or more, 70 nm or more, or even 80 nm or more, while at the same time is generally 500 nm or less, and can be 300 nm or less, 200 nm or less, 150 nm or less, 120 nm or less, or even 100 nm or less. The particle size herein refers to the number average particle size measured by Brookhaven BI-90 Plus Particle Size Analyzer.

The hydroxyl group-containing acrylic emulsion polymer useful in the present invention may be present at a concentration of from 20% to 70%, from 30% to 55%, from 35% to 50%, or from 40% to 45%, by dry or solids weight based on the total weight of the aqueous dispersion (A).

The hydroxyl group-containing acrylic emulsion polymer useful in the present invention may be prepared by emulsion polymerization, of the monomers described above, in an aqueous medium, preferably in the presence of a

surfactant. The surfactant is different from the branched polyether polyol described above and may be added prior to or during the polymerization of the monomers, or combinations thereof. A portion of the surfactant can also be added after the polymerization. These surfactants can be anionic or nonionic, and desirably, anionic surfactants such as sulphate surfactants, sulfonate surfactants, or mixtures thereof. These surfactants may be used in a total amount of 0.1% or more, and can be 0.3% or more, 0.5% or more, 0.7% or more, 0.9% or more, or even 1.2 % or more, while at the same time is generally 5% or less, and can be 4% or less, 3% or less, 2% or less, or even 1.5% or less, by weight based on the total weight of the monomers for preparing the hydroxyl group-containing acrylic emulsion polymer.

Monomers may be added neat or as an emulsion in water; or added in one or more additions or continuously, linearly or nonlinearly, over the reaction period of preparing the hydroxyl group-containing acrylic emulsion polymer. Total weight concentration of the monomers for preparing the hydroxyl group-containing acrylic emulsion polymer equals to 100% relative to the total weight of the monomers. The weight concentration of each monomer relative to the total weight of monomers for preparing the hydroxyl group-containing acrylic emulsion polymer can be the same as the above described weight concentration of structural units of such monomer relative to the hydroxyl group-containing acrylic emulsion polymer weight. Temperature suitable for polymerization of the monomers may be lower than 100°C, in a range of from 10 to 95°C, or in a range of from 50 to 92°C. Multistage emulsion polymerization using the monomers described above can be used, which at least two stages are formed sequentially, and usually results in the formation of the multistage polymer comprising at least two polymer compositions.

Free radical initiators may be used in the polymerization process. The polymerization process may be thermally initiated or redox initiated emulsion polymerization. Examples of suitable free radical initiators include hydrogen peroxide, t-butyl hydroperoxide, cumene hydroperoxide, ammonium and/or alkali metal persulfates, sodium perborate, perphosphoric acid, and salts thereof; potassium permanganate, and ammonium or alkali metal salts of peroxydisulfuric acid. The free radical initiators may be used typically at a level of 0.01 to 3.0% by weight, based on the total weight of the monomers. Redox systems comprising the above described initiators coupled with a suitable reductant may be used in the polymerization process. Examples of suitable reductants include sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide or dithionite, formadinesulfinic acid, acetone bisulfite, glycolic acid, hydroxymethanesulfonic acid, glyoxylic acid hydrate, lactic acid, glyceric acid, malic acid, tartaric acid and salts of the preceding acids. Metal salts of iron, copper, manganese, silver, platinum, vanadium, nickel, chromium, palladium, or cobalt may be used to catalyze the redox reaction. Chelating agents for the metals may optionally be used.

One or more chain transfer agents may be used in the polymerization process to control the molecular weight of the hydroxyl group-containing acrylic emulsion polymer. Examples of suitable chain transfer agents include 3-mercaptopropionic acid, methyl 3-mercaptopropionate, butyl 3-mercaptopropionate, n-dodecyl mercaptan, n-hexadecanethiol, tert-dodecyl mercaptan, n-octadecanethiol, benzenethiol, azelaic alkyl mercaptan, hydroxy group containing mercaptans such as hydroxyethyl mercaptan, mercaptopropionic acid, and mixtures thereof. The chain transfer agent may be used at a concentration of greater than 0.3%, and can be 0.4% or more, 0.5% or more, 0.6% or more, 0.8% or more, 1% or more, 1.3% or more, 1.5% or more, or even 2.0%, while at the same time is generally 20% or less, 15% or less, 13% or less, 10% or less, 8% or less, 6% or less, 4% or less, 3% or less, or even 2.5% or less, by weight based on the total weight of the monomers.

Types and levels of the monomers described above may be chosen to provide the obtained hydroxyl group-containing acrylic emulsion polymer with a glass transition temperature (Tg) suitable for different applications. The hydroxyl group-containing acrylic emulsion polymer may have a Tg in a range of from 0 to 80°C, and can be 0°C or more, 10°C or more, 15°C or more, 20°C or more, 25°C or more, 30°C or more, 35°C or more, or even 40°C or more, while at the same time is generally 80°C or less, and can be 75°C or less, 70°C or less, 65°C or less, 60°C or less, 55°C or less, or even 50°C or less. "Tg" as used herein may be determined by differential scanning calorimetry (DSC) (further details provided below under DSC Analysis).

After completing the polymerization process, the obtained hydroxyl group-containing acrylic emulsion polymer dispersion may be neutralized by one or more bases to a pH value, for example, at least 5, from 5.5 to 10, from 6.0 to 9, from 6.2 to 8, from 6.4 to 7.5, or from 6.6 to 7.2. Examples of suitable bases include ammonia; alkali metal or alkaline earth metal compounds such as sodium hydroxide, potassium hydroxide, calcium hydroxide, zinc oxide, magnesium oxide, sodium carbonate; primary, secondary, and tertiary amines, such as triethyl amine, ethylamine, propylamine, monoisopropylamine, monobutylamine, hexylamine, ethanolamine, diethyl amine, dimethyl amine, di-npropylamine, tributylamine, triethanolamine, dimethoxyethylamine, 2-ethoxyethylamine, 3-ethoxypropylamine, dimethylethanolamine, diisopropanolamine, morpholine, ethylenediamine, 2-diethylaminoethylamine, 2,3-diaminopropane, 1,2-propylenediamine, neopentanediamine, dimethylaminopropylamine, hexamethylenediamine, 4,9-dioxadodecane-1,12-diamine, polyethyleneimine or polyvinylamine; aluminum hydroxide; or mixtures thereof.

The polyurethane composition of the present invention further comprises (B) one or more polyisocyanates useful as crosslinkers. The polyisocyanates may include any molecule having 2 or more isocyanate (NCO) groups, or mixtures of two or more such molecules. The polyisocyanate can be an aliphatic, alicyclic, or aromatic polyisocyanate, or mixtures

thereof. Aliphatic polyisocyanates are polyisocyanates where the NCO group is not directly attached to an aromatic ring. The polyisocyanates can be biuret, trimer isocyanurate, dimer uretdione, asymmetric trimer iminooxadiazindione, or allophanate. The polyisocyanates may have an average functionality greater than 2 (>2) or from 2.5 to 10. Examples of suitable polyisocyanates include aliphatic diisocyanates, as well as dimers and trimers thereof, such as, for example, $C_2$-$C_8$ alkylene diisocyanates, such as tetramethylene diisocyanate and hexamethylene diisocyanate (HDI), 1,12-dodecane diisocyanate, 2,2,4-trimethyl-hexamethylene diisocyanate, 2,4,4-trimethyl-hexamethylene diisocyanate, 2-methyl-1,5-pentamethylene diisocyanate; alicyclic diisocyanates, as well as dimers and trimers thereof, such as, for example, isophorone diisocyanate (IPDI) and dicyclohexyl methane diisocyanate (HMDI), 1,4-cyclohexane diisocyanate, and 1,3-bis-(isocyanatomethyl)cyclohexane; aromatic diisocyanates, as well as dimers and trimers thereof, such as, for example, toluene diisocyanate (TDI), and diphenyl methane diisocyanate (MDI). Desirably, the polyisocyanate comprises an aliphatic polyisocyanate. More desirably, the polyisocyanate is selected from a hexamethylene diisocyanate homopolymer, a hexamethylene diisocyanate adduct, an isophorone diisocyanate homopolymer, an isophorone diisocyanate adduct, or mixtures thereof. The trimers (or isocyanurates) in the polyisocyanate may be prepared by methods known in the art, for example, as disclosed in U.S. Patent Publication No. 2006/0155095A1, to Daussin et al., by trimerizing an alicyclic diisocyanate (e.g. isophorone diisocyanate) in the presence of one or more trimerization catalyst, such as, for example, a tertiary amine or phosphine or a heterogeneous catalyst, and, if desired, in the presence of solvents and/or assistants, such as co-catalysts, expediently at elevated temperature, until the desired isocyanate (NCO) content has been reached, and then deactivating the catalyst using inorganic and organic acids, the corresponding acid-halides and alkylating agents and, preferably, heating. Isocyanurate compositions containing isocyanurates from aliphatic diisocyanates may likewise be formed by cyclizing aliphatic diisocyanates in the presence of one or more trimerization catalyst and then deactivating the catalyst. Any of the isocyanurates can be further modified by conventional methods to contain urethane, urea, imino-s-triazine, uretonimine or carbodiimide moieties. Desirably, the polyisocyanate is selected from an aliphatic diisocyanate, dimers and trimers thereof, or mixtures thereof. More desirably, the polyisocyanate is selected from aliphatic trimers such as, specially HDI trimer or a mixture of HDI trimer and IPDI trimer.

The polyisocyanate useful in the present invention may include one or more polyisocyanate prepolymers, which may be formed by reaction of HDI trimer and/or another aliphatic diisocyanate/trimer with a monol, diol, diamine, or monoamine. Such prepolymers may further comprise a polyalkoxy or polyether chain. Still further, suitable polyisocyanates may be modified by an ionic compound such as aminosulfonic acid. Commercially available polyisocyanates may include, for example, DESMODUR™ N3300, N3600, and N3900 polyisocyanates and BAYHYDUR™ XP 2655, 401-60 and 401-70 polyisocyanates (Covestro); TOLONATE HDT, HDT-LV and HDT-LV2, and EASAQUA L 600 polyisocyanates (Vencorex Chemicals); DURANATE TLA-100 and TMA-100 polyisocyanates (Asahi Kasei); and AQUOLIN 268, 269 and 270 polyisocyanates (Wanhua Chemicals).

The polyisocyanate useful in the present invention can be used alone or diluted with one or more solvents to form a polyisocyanate solution, prior to mixing with the part A. Such solvents can reduce the viscosity of the polyisocyanate and have no reactivity with the polyisocyanate. The solvent may be used in an amount of from 5% to 150%, from 15% to 130%, from 20% to 120%, or from 30% to 100%, by weight based on the weight of the polyisocyanate. Suitable solvents may include, for example, propylene glycol diacetate, propylene glycol methyl ether acetate, dipropylene glycol dimethyl ether, or mixtures thereof.

The polyisocyanate may be present in an amount sufficient to provide a mole ratio of total moles of isocyanate groups in the polyisocyanate, which may contain two or more different polyisocyanates described above, to total moles of hydroxyl groups in the hydroxyl group-containing acrylic emulsion polymer and branched polyether polyol in a range of from 0.8:1 to 2.5:1, from 0.9:1 to 2.0:1, or from 1:1 to 1.5:1.

The polyurethane composition of the present invention may comprise or be free of one or more catalysts to enhance curing. The catalyst can be any suitable catalyst for two-component polyurethane composition, including, for example, metal-based catalysts such as tin-, bismuth-, zinc-, aluminum-, zirconium-containing catalysts or tertiary amine catalysts including aliphatic and cyclo-aliphatic tertiary amine catalysts which are mono-, di- or tri-amines, and mixtures thereof. Examples of suitable metal-based catalysts include dibutyltin dilaurate, dibutyltin mercaptide, dibutyltin sulfide, dimethyltin mercaptide, dibutyltin mercaptoester, zirconium dionate, Al dionate, bismuth neodecanoate, and zinc amine compounds. Suitable tertiary amine catalysts may include, for example, triethylene diamine, triethylene amine, 1,4-diazabicyclo[2.2.2]octane, 6-(dibutylamino)-1,8-diazabicyclo[5.4.0]undec-7-ene, dimethyl cyclohexyl amine, and mixtures thereof. The catalyst may be present in an amount of from 0.01% to 2.5% or from 0.1% to 1.0%, by weight based on the total weight of the polyisocyanate and hydroxy group-containing component (e.g., the hydroxyl group-containing acrylic emulsion polymer and the branched polyether polyol) solids.

The polyurethane composition of the present invention may comprise or be free of one or more pigments, one or more extenders, or mixtures thereof. "Pigments" herein refers to a particulate inorganic or organic material which is capable of materially contributing to the opacity, the color, or hiding capability of a coating. Inorganic pigments typically having a refractive index greater than 1.8 may include, for example, titanium dioxide ($TiO_2$), zinc oxide, zinc sulfide, iron oxide, barium sulfate, barium carbonate, or mixtures thereof. Examples of suitable organic pigments include phthalo blue,

phthalo green, monoazo yellow, carbon black, or mixtures thereof. Preferred pigment used in the present invention is $TiO_2$. The term "extender" refers to a particulate material having a refractive index of less than or equal to 1.8 and greater than 1.3. Examples of suitable extenders include calcium carbonate, aluminium oxide ($Al_2O_3$), clay, calcium sulfate, aluminosilicate, silicate, zeolite, mica, diatomaceous earth, solid or hollow glass, ceramic bead, and opaque polymers such as ROPAQUE™ Ultra E available from The Dow Chemical Company (ROPAQUE is a trademark of The Dow Chemical Company), or mixtures thereof. The pigments and/or the extender are typically present in the part A of the polyurethane composition. The polyurethane composition may have a pigment volume concentration (PVC) of from zero to 75%, from 5% to 50%, or from 10% to 30%. PVC may be determined according to the equation: PVC = [Volume *(Pigment + Extender)* / Volume *(Pigment + Extender + Emulsion polymer + Branched polyether polyol)]* × 100%.

The polyurethane composition of the present invention may comprise or be free of one or more coalescents. "Coalescents" herein refer to solvents that fuse polymer particles into a continuous film under ambient conditions (10-30 °C, relative humidity: 30-80%). Examples of suitable coalescents include dipropylene glycol n-butyl ether, propylene glycol n-butyl ether, propylene glycol methyl ether, 2-n-butoxyethanol, dipropylene glycol methyl ether, propylene glycol n-propyl ether, diethylene glycol monobutyl ether, ethylene glycol monobutyl ether, ethylene glycol monohexyl ether, triethylene glycol monobutyl ether, dipropylene glycol n-propyl ether, n-butyl ether, aromatic hydrocarbons such as Solvesso series from ExxonMobil, 2,2,4-trimethyl-1,3-pentanediol monoisobutyrate such as Texanol ester alcohol from Eastman, or mixtures thereof. The coalescent is typically present in the part A of the polyurethane composition. The concentration of the coalescent may be, by weight based on the weight of the hydroxyl group-containing acrylic emulsion polymer, from zero to 50%, from 5% to 40%, or from 10% to 25%.

The polyurethane composition of the present invention may comprise or be free of conventional additives such as, for example, light stabilizers, ultraviolet (UV) absorbing compounds, leveling agents, wetting agents, dispersants, neutralizers, defoamers, or rheology modifiers, or mixtures thereof. These additives may be present in an amount of from zero to 20%, from 1% to 10%, by weight based on the weight of the polyurethane composition.

The polyurethane composition of the present invention may be prepared with techniques known in the art. A process for preparing the polyurethane composition typically comprises (i) providing the part A comprising the aqueous dispersion comprising the hydroxyl group-containing acrylic emulsion polymer and the branched polyether polyol, and optionally the pigment and other components described above; and (ii) mixing the part A from step (i) with the polyisocyanate. The aqueous dispersion in the part A may be prepared by providing the hydroxyl group-containing acrylic emulsion polymer that is prepared by hydroxyl group-containing acrylic emulsion polymerization of the monomers described above, and admixing the resultant emulsion polymer with the branched polyether polyol. Alternatively, the branched polyether polyol can be added prior to and/or during the polymerization of the monomers used for preparing the hydroxyl group-containing acrylic polymer. Desirably, all of the branched polyether polyol in the polyurethane composition is mixed with the hydroxyl group-containing acrylic emulsion polymer after its polymerization. The polyisocyanate in the part B is preferably diluted with the solvent. The part A and the part B may be mixed immediately before application. The polyurethane composition can be cured at ambient temperature (10-30 °C), or at temperatures ranging from 4°C to 150°C, desirably from 25 °C to 80°C. Curing temperatures may be varied depending on the substrate. Curing times generally range from 10 minutes at temperatures of 50 °C to 90 °C, or 1 to 14 days at temperatures of 10 to 35°C. Examples of suitable substrates include metals, wood, plastics, concrete, cementious substrates, stones, asphalt, elastomeric substrates, glass, or fabrics.

The polyurethane composition of the present invention is useful for producing coatings, with or without a pigment and/or an extender, adhesives, sealants, primers, and caulk compositions. The polyurethane composition can provide an enlarged window for formulations with extended pot life. "Extended pot life" means a polyurethane composition after storage at 35 °C for 3 hours can provide coatings made therefrom with 60° gloss of higher than 75 (further details provided under Gloss Test below). For example, the novel combination of the hydroxyl group-containing acrylic emulsion polymer and the branched polyether polyol in the part A enables the use of various types polyisocyanates, such as aliphatic polyisocyanates without a polyalkoxy chain or an ionic compound modification ("non-modified polyisocyanate"); or with hydrophilic modification such as modifications with a polyalkoxy chain or an ionic compound (e.g., hydrophilic polyisocyanates); thereby forming the two-component polyurethane composition with the extended pot life described above. The two-component polyurethane composition may also provide coatings made therefrom with a distinctness of image (DOI) of 70 or more. DOI measures the sharpness of a reflected image on a surface (e.g., a coating surface) and is an indication of the perfection of a reflection, and lack of haze or "orange peel" in a surface. The polyurethane composition can provide coatings made therefrom with a 60° gloss of 75 or higher. DOI and gloss can be measured according to the test methods described in the Examples section below.

The present invention further provides polyurethane coatings made from the two-component polyurethane composition on any of the substrates mentioned above. Such coatings can be multilayer coatings over a primer layer and, optionally, a basecoat or color coat. The coatings can be coatings for agricultural, construction and earth-moving equipment; architectural coatings; general industrial finish coatings; marine and protective coatings; automotive coatings; auto refinish coatings; plastic coatings; wood coatings, coil coatings; and civil engineering coatings.

EXAMPLES

Some embodiments of the invention will now be described in the following Examples. All percent (%) values are weight percentages relative to the composition weight. Table 1 lists the materials for use in synthesis of polymer dispersions and coating compositions of the samples described herein below. OROTAN, DOWANOL and ACRYSOL are all trademarks of The Dow Chemical Company.

Table 1

| Component | Chemical Description/Function | Commercial Source |
|---|---|---|
| MMA | Methyl methacrylate | The Dow Chemical Company |
| ST | Styrene | Langyuan Chemical Co., Ltd. (China) |
| EHA | 2-Ethylhexyl acrylate | The Dow Chemical Company |
| HEMA | Hydroxyl ethyl methacrylate | The Dow Chemical Company |
| MAA | Methacrylic acid | Sinopharm Chemical Reagent Co., Ltd. |
| PEM | Phosphoethyl methacrylate | Solvay |
| DISPONIL Fes 993 | Non-reactive surfactant, a branched alcohol ethoxylate sulphate, sodium salt, with ethylene oxide units of 11. | BASF |
| n-DDM | Dodecyl mercaptan | Sinopharm Chemical Reagent Co., Ltd. |
| ACRYSOL™ RM-8W thickener | Hydrophobically modified ethylene oxide urethane (HEUR) | The Dow Chemical Company |
| OROTAN™ 681 | Hydrophobic acrylic copolymer dispersant | The Dow Chemical Company |
| Ti-Pure R-706 | Titanium dioxide as a pigment | Chemours Titanium Technologies |
| TEGO™ Twin 4100 | Siloxane-based gemini surfactant as a wetting agent | Evonik Industries |
| TEGO Airex 902W | Defoamer | Evonik Industries |
| DOWANOL™ $DP_{nB}$ | Dipropylene glycol n-butyl ether as a coalescent | The Dow Chemical Company |
| DOWANOL PM | Propylene glycol methyl ether as a coalescent | The Dow Chemical Company |
| DOWANOL PGDA | Propylene glycol diacetate, a solvent for polyisocyanates to reduce viscosity | The Dow Chemical Company |
| Ammonia (28%) | Neutralizer | Sinopharm Chemical Reagent Co., Ltd. |
| $NaNO_2$ | Anti-flash rust agent | Sinopharm Chemical Reagent Co., Ltd. |
| DESMODUR N3600 isocyanate | Hexamethylene diisocyanate trimer | Covestro |

(continued)

| Component | Chemical Description/Function | Commercial Source |
|---|---|---|
| BAYHYDROL A-145 secondary dispersion* | Hydroxyl acrylic dispersion with a hydroxyl content of 3.3% (solids: 45%) | Covestro |
| * "Secondary dispersion " refers to aqueous dispersion made by a process comprising: solution polymerization of monomer in an organic solvent, neutralization of the obtained polymer, and making phase inversion to obtain the aqueous dispersion. | | |

Table 2

| Polyether polyol | Description | Fn | Total MW, g/mol | Mw per branch, g/mol | EO content by weight based on the polyol weight |
|---|---|---|---|---|---|
| Polyether Polyol 1 | Sorbitol initiated EO-PO copolymer | 6 | 12000 | 2000 | 35% |
| Polyether Polyol 2 | Sorbitol initiated PO-EO copolymer | 6 | 12000 | 2000 | 20% |
| Polyether Polyol 3 | Sorbitol initiated EO-PO copolymer | 6 | 5600 | 900 | 35% |
| Polyether Polyol 4 | Sorbitol initiated PO-EO copolymer | 6 | 12000 | 2000 | 15% |
| Polyether Polyol 5 | Glycerol initiated PO-EO copolymer | 3 | 6000 | 2000 | 16% |
| Polyether Polyol 6 | Glycerol initiated EO-PO copolymer | 3 | 4500 | 1500 | 13% |
| Polyether Polyol 7 | Glycerol initiated EO-PO copolymer | 3 | 3600 | 1200 | 36.5% |
| Polyether Polyol 8 | PO-EO-PO diblock copolymer | 2 | 4000 | 2000 | 14% |
| Polyether Polyol 9 | EO-PO-EO diblock copolymer | 2 | 4000 | 2000 | 18-20% |
| * All polyether polyols listed in Table 2 are commercially available from The Dow Chemical Company, which can be prepared according to the procedure similar to Synthesis of Polyether Polyol 1 below, except for the feeding order and/or amounts of alkylene oxides. | | | | | |

*EO (ethylene oxide) represents*

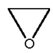

*and PO (propylene oxide) represents*

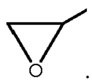
.

Synthesis of Polyether Polyol 1

The branched polyether polyol 1 was prepared based on the initiator sorbitol, followed with the step of alkoxylation under known alkoxylation conditions utilizing KOH as catalyst. Sorbitol was added to the reactor with KOH (active weight at 2000 ppm, aqueous solution at a concentration of 50% by weight). The reactor was closed, and the contents of the reactor were stirred at 250 revolutions per minute (RPM) and heated to 80°C. Vacuum was applied as the contents of the reactor were maintained at 80°C to remove the residue water from the reactor. Then, the contents of the reactor were heated to 120°C and ethylene oxide was added into the reactor slowly while maintaining the pressure in the reactor less than 4.5 bar (450 kilopascals). Following addition of ethylene oxide (EO), the contents of the reactor were maintained at 120°C for digestion; the pressure of the reactor was monitored until the pressure was close to the initial pressure (before EO addition). As a second feeding step, propylene oxide (PO) was also slowly added into the reactor at 120 °C while maintaining the pressure in the reactor less than 4.5 bar. Then, the contents of the reactor were maintained at 120°C for digestion; and the pressure of the reactor was monitored until the pressure was close to that before PO addition and stable for 2 hours. Then, the reactor was purged three times with nitrogen and vacuum to remove any residual propylene oxide. The contents of the reactor were cooled down to 60°C and neutralized with acetic acid to provide the

polyether polyol represented by Formula I. The weight ratio of EO was around 35% and the weight ratio of PO was around 63%, relative to the total weight of the ingredients used in the preparation of the Polyether Polyol 1.

Synthesis of Polyether Polyol 2

The Polyether Polyol 2 was prepared according to the same procedure as the Synthesis of Polyether Polyol 1 above, except that the order of EO and PO feeding was switched, and the weight ratio of EO used was around 20% and the weight ratio of PO used was around 78%, based on the total weight of the ingredients used in the preparation of the Polyether Polyol 2.

The following standard analytical equipment and methods are used in the Examples and in determining the properties and characteristics stated herein:

Particle Size Measurement

The particle size of polymer particles in an aqueous dispersion refers to the number average particle size measured by Brookhaven BI-90 Plus Particle Size Analyzer.

Tg Measurement

Tg was measured by DSC. A 5-10 milligram (mg) sample was analyzed in a sealed aluminum pan on a TA Instrument DSC Q2000 fitted with an auto-sampler under nitrogen atmosphere. Tg measurement by DSC was with three cycles including, from -40 to 180°C, 10 °C/min ($1^{st}$ cycle, then hold for 5 minutes (min) to erase thermal history of the sample), from 180 to -40°C, 10 °C/min ($2^{nd}$ cycle), and from -40 to 180°C, 10 °C/min ($3^{rd}$ cycle). Tg was obtained from the $3^{rd}$ cycle by taking the mid-point in the heat flow versus temperature transition as the Tg value.

GPC Analysis

GPC analysis of acrylic polymers was performed generally by Agilent 1200. A sample was dissolved in tetrahydrofuran (THF)/formic acid (FA) (5%) with a concentration of 2 mg/mL (milliliter) and then filtered through 0.45 micrometer (μm) polytetrafluoroethylene (PTFE) filter prior to GPC analysis. The GPC analysis was conducted using the following conditions:
Column: One PLgel GUARD columns (10 μm, 50 millimeters (mm) x 7.5mm), Two Mixed B columns (7.8mm x 300mm) in tandem; column temperature: 40°C; mobile phase: THF/FA (5%); flow rate: 1.0 mL/min; Injection volume: 100 microliters (μL); detector: Agilent Refractive Index detector, 40°C; and calibration curve: PL Polystyrene I Narrow standards with molecular weights ranging from 2329000 to 580 g/mol, using polynom 3 fitness.

Gloss Test

• Initial Gloss

Gloss measurement was performed at a given angle (60 degree (°)) using a BYK Gardner micro-TRI-gloss meter (BYK-Gardner USA, Columbia, Md.), according to ASTM D523 (1999). A two-component polyurethane composition, immediately after mixing all ingredients therein, was drawn down on aluminum panels (Q-panel A-46) at 150 μm wet thickness. After drying at room temperature for 20 min, the coated panels were further dried at 60°C for 40 min, and then gloss was measured. An average of three separate readings was reported as "Initial Gloss". An acceptable initial gloss (60°) is 84 or more.

• Gloss after storage

A two-component polyurethane composition, immediately after mixing all ingredients therein, was stored at 35 °C for 1.5 hours and 3 hours, respectively. Coated panels were then prepared by using the resultant polyurethane compositions after 1.5-hour storage or after 3-hour storage according to the same procedure and drying conditions used above in determining the Initial Gloss. The obtained coated panels were then measured for 60° gloss and denoted as "Gloss (35°C/1.5 hours)" and "Gloss (35°C/3 hours)", respectively. An average of three separate readings was reported. Gloss after 3-hour storage (60° gloss) being 75 or higher means acceptable pot life. Otherwise, if Gloss after 3-hour storage (60° gloss) is less than 75, it fails the pot life test.

Distinctness of Image (DOI) Test

DOI measurement was performed according to ASTM D5767-95 (2004) (Standard Test Methods for Instrumental Measurement of Distinctness-of- Image Gloss of Coating Surfaces), using a BYK Gardner micro-wave-scan meter (BYK-Gardner USA, Columbia, MD). A two-component polyurethane composition, immediately after mixing all ingredients therein, was drawn down on aluminum panels (Q-panel A-36) at 200 μm wet thickness. After drying at room temperature for 20 min, the panels were further allowed to dry at 60°C for 40 min. For each panel, an average of three separate readings was reported as the DOI value. If a DOI is 70 or higher (≥70), the sample passes the DOI test. Otherwise, a sample with a DOI of less than 70 fails.

Solids content

Solids content of a sample was measured by weighing 0.7±0.1 gram (g) of the sample (wet weight of the sample is denoted as "W1"), putting into an aluminum pan (weight of aluminum pan is denoted as "W2") in an oven at 150°C for 25 min, and then cooling the aluminum pan with the dried sample and weighing a total weight denoted as "W3". Solids content of the sample is calculated by (W3-W2)/W1*100%.

Synthesis of hydroxyl group-containing acrylic emulsion polymer dispersion ("HA-01")

A monomer emulsion was prepared as follows:
To 318 g of deionized (DI) water, was added 23 g of DISPONIL Fes 993 surfactant (30% active), 173 g of MMA, 306 g of ST, 204 g of EHA, 304 g of HEMA, 16 g of MAA, 16 g of PEM, and 21 g of n-DDM were mixed together to produce a stable monomer emulsion. To DI water (600 g) under nitrogen atmosphere at 90°C, was added Fes 993 surfactant (30% active) (42.6 g), aqueous ammonia (28%, 2.5 g) in DI water (16.9 g), 29 g of the monomer emulsion and ammonium persulfate (APS) (2.03 g) in DI water (16.9 g) followed by DI water (3.75 g) to form a reaction mixture. The remaining monomer emulsion was then added at 86°C over 160 min followed by DI water (30 g). At the end of polymerization, $FeSO_4.7H_2O$ (0.005 g) in DI water (15.75 g) mixed with ethylenediamine tetraacetic acid tetrasodium salt (0.005 g) in DI water (15.75 g), a solution of t-butyl hydroperoxide (70%, 1.6 g) in DI water (32.76 g) and a solution of isoascorbic acid (0.78 g) in DI water (34.32 g), a solution of t-butyl hydroperoxide (0.78 g) in DI water (16.41 g) and a solution of isoascorbic acid (0.39 g) in DI water (17.19 g) were all added at 60 °C, then ammonia (28%, 7.02 g) in DI water (16.65 g) were added at 50°C, thus obtaining an aqueous dispersion. The obtained aqueous dispersion was characterized according the test methods described above and characterization results are as follows: particle size: 76 nm, pH: 6.96, solids content: 42.75%, viscosity: 3589 centipoises at 25 °C as measured using a Brookfield viscometer DV-I Primer (60 RPM and spindle #2), Tg measured by DSC: 43°C, number average molecular weight (Mn) measured by GPC: 6,629 g/mol, and Mw measured by GPC: 16,586 g/mol.

IEs 1-4 and CE-A to CE-J Paint Formulation Samples

Tables 3 and 4 list formulations for preparing paint formulation (i.e., coating composition) samples with the amount of each component reported in grams (g). The molar ratio of NCO groups to OH groups in each paint formulation was 1.2:1. Components for preparing the grind were mixed using a high speed Cowles disperser at 1,500 RPM for 30 min to form the grind. Then, components in the letdown were added to the grinds using a conventional lab mixer to obtain the part A. The part A of each paint formulation sample was left overnight, and then components of the part B were added into the part A and mixed using a high speed Cowles disperser at 600 RPM for 10 min, thereby forming paint formulation samples. The solids content of each paint formulation sample is given in Tables 3 and 4. The resultant paint formulation samples were characterized according to the test methods described above and characterization results are given in Tables 3 and 4, respectively.

As shown in Table 3, the paint formulation samples of IE-1, IE-2, IE-3 and IE-4 all showed long pot life (60° gloss after 3-hour storage at 35°C ≥75), while providing high gloss (60° Initial Gloss ≥ 84) and passing the DOI test (Initial DOI ≥70).

In contrast, as shown in Table 4, the paint formulation sample free of a branched polyether polyol (CE-A) demonstrated unacceptable initial gloss and pot life. The paint formulation samples comprising branched polyether polyols with lower MW per branch (CE-B), or branched polyether polyols with lower concentration of ethylene oxide units and/or lower functionalities (CE-C through CE-H) all demonstrated shorter pot life. The secondary dispersion of hydroxyl acrylic resin provided the paint formulation samples (CE-I and CE-J) with unacceptable shorter pot life, with or without addition of the branched Polyether Polyol 1, as compared to HA-01 emulsion polymer dispersion.

Table 3. Paint formulations for IEs 1-4 samples

| | IE-1 | IE-2 | IE-3 | IE-4 |
|---|---|---|---|---|
| **Part A** | | | | |
| ***Grind*** | | | | |
| Water | 4 | 4 | 4 | 4 |
| OROTAN 681 | 0.49 | 0.49 | 0.49 | 0.49 |
| Twin 4100 | 0.15 | 0.15 | 0.15 | 0.15 |
| Ammonia (28%) | 0.2 | 0.2 | 0.2 | 0.2 |
| Ti-Pure R-706 | 17.05 | 17.05 | 17.05 | 17.05 |
| ACRYSOL RM-8w | 0.46 | 0.46 | 0.46 | 0.46 |
| TEGO Airex 902W | 0.05 | 0.05 | 0.05 | 0.05 |
| DI water | 6 | 6 | 6 | 6 |
| ***Letdown*** | | | | |
| HA-01 emulsion | 42.8 | 44 | 44.7 | 42.8 |
| DI water | 3.25 | 2.49 | 2.13 | 3.25 |
| Polyether Polyol 1 | 2 | 1.6 | 1.2 | |
| Polyether Polyol 2 | | | | 2 |
| DOWANOL DPnB | 2.17 | 2.15 | 2.18 | 2.17 |
| DOWANOL PM | 1.45 | 1.43 | 1.46 | 1.45 |
| ACRYSOL RM-8w | 0.2 | 0.2 | 0.2 | 0.2 |
| $NaNO_2$ (15%) | 0.9 | 0.9 | 0.9 | 0.9 |
| ***Part B*** | | | | |
| DESMODUR N3600 | 9.42 | 9.42 | 9.42 | 9.42 |
| DOWANOL PGDA | 9.42 | 9.42 | 9.42 | 9.42 |
| *Total* | 100 | 100 | 100 | 100 |
| *Solids content, wt%* | 46.77 | 46.77 | 46.77 | 46.77 |
| ***Characterization*** | | | | |
| Polyol concentration[1] | 10% | 8% | 6% | 10% |
| Initial gloss (60°) | 91 | 88 | 87 | 89 |
| 60° Gloss (35°C/1.5 hours) | 91 | 89 | 84 | 87 |
| 60° Gloss (35°C/3 hours) | 83 | 87 | 75 | 76 |
| Initial DOI | 82.5 | 80.3 | 76.1 | 72.1 |

[1] Polyol concentration: wt% of branched polyether polyol relative to solids of hydroxyl acrylic polymer dispersion.

Table 4. Paint formulations for CEs A-J samples

| | CE-A | CE-B | CE-C | CE-D | CE-E | CE- F | CE-G | CE-H | CE-I | CE-J |
|---|---|---|---|---|---|---|---|---|---|---|
| **Part A** | | | | | | | | | | |
| ***Grind*** | | | | | | | | | | |
| Water | 4 | 4 | 4 | 4 | 4 | 4 | 4 | 4 | 4 | 4 |
| OROTAN 681 | 0.49 | 0.49 | 0.49 | 0.49 | 0.49 | 0.49 | 0.49 | 0.49 | 0.49 | 0.49 |
| Twin 4100 | 0.15 | 0.15 | 0.15 | 0.15 | 0.15 | 0.15 | 0.15 | 0.15 | 0.15 | 0.15 |

(continued)

| | CE-A | CE-B | CE-C | CE-D | CE-E | CE- F | CE-G | CE-H | CE-I | CE-J |
|---|---|---|---|---|---|---|---|---|---|---|
| **Part A** | | | | | | | | | | |
| ***Grind*** | | | | | | | | | | |
| Ammonia (28%) | 0.2 | 0.2 | 0.2 | 0.2 | 0.2 | 0.2 | 0.2 | 0.2 | 0.2 | 0.2 |
| Ti-Pure R-706 | 17.05 | 17.05 | 17.05 | 17.05 | 17.05 | 17.05 | 17.05 | 17.05 | 17.05 | 17.05 |
| ACRYSOL RM-8W | 0.46 | 0.46 | 0.46 | 0.46 | 0.46 | 0.46 | 0.46 | 0.46 | 0.46 | 0.46 |
| TEGO Airex 902W | 0.05 | 0.05 | 0.05 | 0.05 | 0.05 | 0.05 | 0.05 | 0.05 | 0.05 | 0.05 |
| DI water | 6 | 6 | 6 | 6 | 6 | 6 | 6 | 6 | 6 | 6 |
| ***Letdown*** | | | | | | | | | | |
| HA-01 emulsion | 46.8 | 42.8 | 42.8 | 42.8 | 42.8 | 42.8 | 42.8 | 42.8 | | |
| A-145 dispersion | | | | | | | | | 44.75 | 41.3 |
| DI water | 0.30 | 3.25 | 3.25 | 3.25 | 3.25 | 3.25 | 3.25 | 3.25 | 4.28 | 6.94 |
| Polyether Polyol 1 | | | | | | | | | | 2 |
| Polyether Polyol 3 | | 2 | | | | | | | | |
| Polyether Polyol 4 | | | 2 | | | | | | | |
| Polyether Polyol 5 | | | | 2 | | | | | | |
| Polyether Polyol 6 | | | | | 2 | | | | | |
| Polyether Polyol 7 | | | | | | 2 | | | | |
| Polyether Polyol 8 | | | | | | | 2 | | | |
| Polyether Polyol 9 | | | | | | | | 2 | | |
| DOWANOL DPnB | 2.37 | 2.17 | 2.17 | 2.17 | 2.17 | 2.17 | 2.17 | 2.17 | 2.41 | 2.23 |
| DOWANOL PM | 1.58 | 1.45 | 1.45 | 1.45 | 1.45 | 1.45 | 1.45 | 1.45 | 1.61 | 1.48 |
| ACRYSOL RM-8W | 0.2 | 0.2 | 0.2 | 0.2 | 0.2 | 0.2 | 0.2 | 0.2 | 0.2 | 0.2 |
| $NaNO_2$ (15%) | 0.9 | 0.9 | 0.9 | 0.9 | 0.9 | 0.9 | 0.9 | 0.9 | 0.9 | 0.9 |
| ***Part B*** | | | | | | | | | | |
| DESMODUR N3600 | 9.72 | 9.42 | 9.42 | 9.42 | 9.42 | 9.42 | 9.42 | 9.42 | 8.72 | 8.27 |
| DOWANOL PGDA | 9.72 | 9.42 | 9.42 | 9.42 | 9.42 | 9.42 | 9.42 | 9.42 | 8.72 | 8.27 |
| *Total* | 100 | 100 | 100 | 100 | 100 | 100 | 100 | 100 | 100 | 100 |
| *Solids content, wt%* | 46.78 | 46.77 | 46.77 | 46.77 | 46.77 | 46.77 | 46.77 | 46.77 | 46.13 | 46.11 |
| ***Characterization*** | | | | | | | | | | |
| Polyol concentration[1] | 0 | 10% | 10% | 10% | 10% | 10% | 10% | 10% | 0 | 10% |
| Initial gloss (60°) | 89 | 92 | 86 | 88 | 88 | 87 | 89 | 89 | 88 | 84 |
| 60° Gloss (35°C/1.5 hours) | 79 | 91 | 87 | 68 | 69 | 84 | 64 | 83 | 61 | 36 |
| 60° Gloss (35°C/3 hours) | 31 | 47 | 56 | 28 | 29 | 42 | 30 | 38 | 20 | 15 |
| Initial DOI | N/A | 78.4 | N/A | 75.7 | 76.5 | N/A | N/A | 76.2 | 87 | 86 |

[1] Polyol concentration: wt% of branched polyether polyol relative to solids of hydroxyl acrylic polymer dispersion

## Claims

**1.** A two-component polyurethane composition comprising:

(A) an aqueous dispersion comprising:

a hydroxyl group-containing acrylic emulsion polymer comprising, by weight based on the weight of the hydroxyl group-containing acrylic emulsion polymer, from 5% to 50% of structural units of a hydroxy-functional alkyl (meth)acrylate; and
from 2% to 20%, by weight based on the weight of the hydroxyl group-containing acrylic emulsion polymer, of a branched polyether polyol; wherein the branched polyether polyol has a hydroxyl functionality of from 4 to 10 and a molecular weight per branch of from 1200 to 2500 grams per mole, and contains from 20% to 40% of ethylene oxide units, by weight based on the weight of the branched polyether polyol; and

(B) a polyisocyanate.

2. The two-component polyurethane composition of claim 1, wherein the branched polyether polyol has the structure of formula (I),

$$R\text{-}[O\text{-}(AO)_x\text{-}H]_y \qquad (I)$$

where R represents a multivalent aliphatic hydrocarbon radical, each AO is independently selected from an ethylene oxide unit, a propylene oxide unit, a butylene oxide unit, or combinations thereof; provided that the ethylene oxide units are present at a total concentration of from 20% to 40%, by weight based on the weight of the branched polyether polyol; subscript x is in a range of 20 to 55; and subscript y is in a range of 4 to 10.

3. The two-component polyurethane composition of claim 1 or 2, wherein the branched polyether polyol contains, by weight based on the weight of the branched polyether polyol, from 20% to 40% of the ethylene oxide units and from 60% to 80% of propylene oxide units.

4. The two-component polyurethane composition of any one of claims 1-3, wherein the polyisocyanate is an aliphatic diisocyanate trimer.

5. The two-component polyurethane composition of any one of claims 1-4, wherein the aqueous dispersion (A) comprises from 5% to 10% of the branched polyether polyol, by weight based on the weight of the hydroxyl group-containing acrylic emulsion polymer.

6. The two-component polyurethane composition of any one of claims 1-5, wherein the hydroxy-functional alkyl (meth) acrylate is selected from 2-hydroxyethyl acrylate, 2-hydroxyethyl methacrylate, 2-hydroxypropyl acrylate, 2-hydroxypropyl methacrylate, or mixtures thereof.

7. The two-component polyurethane composition of any one of claims 1-6, wherein the hydroxyl group-containing acrylic emulsion polymer has a weight average molecular weight of 50,000 g/mol or less.

8. The two-component polyurethane composition of any one of claims 1-7, wherein the hydroxyl group-containing acrylic emulsion polymer has a glass transition temperature of from 10°C to 80°C as determined by differential scanning calorimetry.

9. The two-component polyurethane composition of any one of claims 1-8, wherein the hydroxyl group-containing acrylic emulsion polymer comprises, by weight based on the weight of the hydroxyl group-containing acrylic emulsion polymer, from 5% to 35% of structural units of the hydroxy-functional alkyl (meth)acrylate, from 0.2% to 5% of structural units of an acid monomer, a salt thereof, or mixtures thereof, and from 60% to 94.8% of structural units of a monoethylenically unsaturated nonionic monomer other than the hydroxy-functional alkyl (meth)acrylate.

10. The two-component polyurethane composition of any one of claims 1-9, wherein the mole ratio of total isocyanate groups to total hydroxyl groups in the aqueous dispersion (A) is in a range of from 0.8:1 to 2.5:1.

11. The two-component polyurethane composition of any one of claims 1-10, wherein the branched polyether polyol has a molecular weight of from 4800 to 15000 grams per mole.

12. A process for preparing the two-component polyurethane composition of any one of claims 1-11, comprising: admixing the aqueous dispersion (A) with the polyisocyanate (B).

## Patentansprüche

1. Zweikomponenten-Polyurethanzusammenfassung, umfassend:

   (A) eine wässrige Dispersion, umfassend:

   ein hydroxylgruppenhaltiges Acrylemulsionspolymer, umfassend, bezogen auf das Gewicht des hydroxylgruppenhaltigen Acrylemulsionspolymers, von zu 5 % bis 50 % Struktureinheiten ein hydroxyfunktionelles Alkyl(meth)acrylat; und
   zu 2 % bis 20 Gew.-%, bezogen auf das Gewicht des hydroxylgruppenhaltigen Acrylemulsionspolymers, ein verzweigtes Polyetherpolyol; wobei das verzweigte Polyetherpolyol eine Hydroxylfunktionalität von 4 bis 10 und ein Molekulargewicht pro Verzweigung von 1200 bis 2500 Gramm pro Mol aufweist und von zu 20 Gew.-% bis 40 Gew.-% Ethylenoxideinheiten, bezogen auf das Gewicht des verzweigten Polyetherpolyols, enthält; und

   (B) ein Polyisocyanat.

2. Zweikomponenten-Polyurethanzusammensetzung nach Anspruch 1, wobei das verzweigte Polyetherpolyol die Struktur der Formel (I) aufweist,

   $$R\text{-}[O\text{-}(AO)_x\text{-}H]_y \qquad (I)$$

   wobei R ein mehrwertiges aliphatisches Kohlenwasserstoffradikal darstellt, jedes AO unabhängig aus einer Ethylenoxideinheit, einer Propylenoxideinheit, einer Butylenoxideinheit oder Kombinationen davon ausgewählt ist; vorausgesetzt, dass die Ethylenoxideinheiten in einer Gesamtkonzentration von zu 20 Gew.-% bis 40 Gew.-%, bezogen auf das Gewicht des verzweigten Polyetherpolyols, vorhanden sind; Index x in einem Bereich von 20 bis 55 liegt; und Index y in einem Bereich von 4 bis 10 liegt.

3. Zweikomponenten-Polyurethanzusammensetzung nach Anspruch 1 oder 2, wobei das verzweigte Polyetherpolyol, bezogen auf das Gewicht des verzweigten Polyetherpolyols, von zu 20 Gew.-% bis 40 Gew.-% Ethylenoxideinheiten und von zu 60 Gew.-% bis 80 Gew.-% Propylenoxideinheiten enthält.

4. Zweikomponenten-Polyurethanzusammensetzung nach einem der Ansprüche 1 bis 3, wobei das Polyisocyanat ein aliphatisches Diisocyanat-Trimer ist.

5. Zweikomponenten-Polyurethanzusammensetzung nach einem der Ansprüche 1 bis 4, wobei die wässrige Dispersion (A) von zu 5 Gew.-% bis 10 Gew.-% das verzweigte Polyetherpolyol, bezogen auf das Gewicht des hydroxylgruppenhaltigen Acrylemulsionspolymers, umfasst.

6. Zweikomponenten-Polyurethanzusammensetzung nach einem der Ansprüche 1 bis 5, wobei das hydroxyfunktionelle Alkyl(meth)acrylat aus 2-Hydroxyethylacrylat, 2-Hydroxyethylmethacrylat, 2-Hydroxypropylacrylat, 2-Hydroxypropylmethacrylat oder Mischungen davon ausgewählt ist.

7. Zweikomponenten-Polyurethanzusammensetzung nach einem der Ansprüche 1 bis 6, wobei das hydroxylgruppenhaltige Acrylemulsionspolymer ein gewichtsmittleres Molekulargewicht von 50.000 g/Mol oder weniger aufweist.

8. Wässrige Beschichtungszusammensetzung nach einem der Ansprüche 1 bis 7, wobei das hydroxylgruppenhaltige Acrylemulsionspolymer eine Glasübergangstemperatur von 10 °C bis 80 °C aufweist, wie bestimmt durch Differentialscanningkalorimetrie.

9. Zweikomponenten-Polyurethanzusammensetzung nach einem der Ansprüche 1 bis 8, wobei das hydroxylgruppenhaltige Acrylemulsionspolymer, bezogen auf das Gewicht des hydroxylgruppenhaltigen Acrylemulsionspolymers, von zu 5 Gew.-% bis 35 Gew.-% Struktureinheiten des hydroxyfunktionellen Alkyl(meth)acrylats, von zu 0,2 Gew.-% bis 5 Gew.-% Struktureinheiten eines Säuremonomers, eines Salzes davon oder Mischungen davon und von zu 60 Gew.-% bis 94,8 Gew.-% Struktureinheiten eines monoethylenisch ungesättigten nichtionischen Monomers, das ein anderes als das hydroxyfunktionelle Alkyl(meth)acrylat ist, umfasst.

10. Zweikomponenten-Polyurethanzusammensetzung nach einem der Ansprüche 1 bis 9, wobei das Molverhältnis der

gesamten Isocyanatgruppen zu den gesamten Hydroxylgruppen in der wässrigen Dispersion (A) in dem Bereich von 0,8 : 1 bis 2,5 : 1 liegt.

**11.** Zweikomponenten-Polyurethanzusammensetzung nach einem der Ansprüche 1 bis 10, wobei das verzweigte Polyetherpolyol ein Molekulargewicht von 4.800 bis 15.000 Gramm pro Mol aufweist.

**12.** Verfahren zum Herstellen der Zweikomponenten-Polyurethanzusammensetzung nach einem der Ansprüche 1 bis 11, umfassend: Vermischen der wässrigen Dispersion (A) mit dem Polyisocyanat (B).

## Revendications

**1.** Composition de polyuréthane à deux composants comprenant :

(A) une dispersion aqueuse comprenant :

un polymère acrylique en émulsion à teneur en groupe hydroxyle, comprenant, en poids sur la base du poids du polymère acrylique en émulsion à teneur en groupe hydroxyle, de 5 % à 50 % de motifs structurels d'un (méth)acrylate d'alkyle à fonctionnalité hydroxy ; et
de 2 % à 20 %, en poids sur la base du poids du polymère acrylique en émulsion à teneur en groupe hydroxyle, d'un polyol de polyéther ramifié ; dans laquelle le polyol de polyéther ramifié a une fonctionnalité hydroxyle allant de 4 à 10 et une masse moléculaire par ramification allant de 1 200 à 2 500 grammes par mole, et contient de 20 % à 40 % de motifs oxyde d'éthylène, en poids sur la base du poids du polyol de polyéther ramifié ; et

(B) un polyisocyanate.

**2.** Composition de polyuréthane à deux composants selon la revendication 1, dans laquelle le polyol de polyéther ramifié a la structure de formule (I),

$$R\text{-}[O\text{-}(AO)_x\text{-}H]_y \qquad (I)$$

où R représente un radical hydrocarboné aliphatique multivalent, chaque AO est choisi indépendamment parmi un motif oxyde d'éthylène, un motif oxyde de propylène, un motif oxyde de butylène, ou des combinaisons de ceux-ci ; à condition que les motifs oxyde d'éthylène soient présents à une concentration totale allant de 20 % à 40 %, en poids sur la base du poids du polyol de polyéther ramifié ; l'indice x est compris dans une plage de 20 à 55 ; et l'indice y est compris dans une plage de 4 à 10.

**3.** Composition de polyuréthane à deux composants selon la revendication 1 ou 2, dans laquelle le polyol de polyéther ramifié contient, en poids sur la base du poids du polyol de polyéther ramifié, de 20 % à 40 % des motifs oxyde d'éthylène et de 60 % à 80 % des motifs oxyde de propylène.

**4.** Composition de polyuréthane à deux composants selon l'une quelconque des revendications 1 à 3, dans laquelle le polyisocyanate est un trimère de diisocyanate aliphatique.

**5.** Composition de polyuréthane à deux composants selon l'une quelconque des revendications 1 à 4, dans laquelle la dispersion aqueuse (A) comprend de 5 % à 10 % du polyol de polyéther ramifié, en poids sur la base du poids du polymère acrylique en émulsion à teneur en groupe hydroxyle.

**6.** Composition de polyuréthane à deux composants selon l'une quelconque des revendications 1 à 5, dans laquelle le (méth)acrylate d'alkyle à fonctionnalité hydroxy est choisi parmi acrylate de 2-hydroxyéthyle, méthacrylate de 2-hydroxyéthyle, acrylate de 2-hydroxypropyle, méthacrylate de 2-hydroxypropyle, ou mélanges de ceux-ci.

**7.** Composition de polyuréthane à deux composants selon l'une quelconque des revendications 1 à 6, dans laquelle le polymère acrylique en émulsion à teneur en groupe hydroxyle a une masse moléculaire moyenne en poids de 50 000 g/mol ou moins.

**8.** Composition de polyuréthane à deux composants selon l'une quelconque des revendications 1 à 7, dans laquelle le

polymère acrylique en émulsion à teneur en groupe hydroxyle a une température de transition vitreuse allant de 10 °C à 80 °C comme déterminé par calorimétrie différentielle à balayage.

**9.** Composition de polyuréthane à deux composants selon l'une quelconque des revendications 1 à 8, dans laquelle le polymère acrylique en émulsion à teneur en groupe hydroxyle comprend, en poids sur la base du poids du polymère acrylique en émulsion à teneur en groupe hydroxyle, de 5 % à 35 % de motifs structurels du (méth)acrylate d'alkyle à fonctionnalité hydroxyle, de 0,2 % à 5 % de motifs structurels d'un monomère acide, d'un sel de celui-ci, ou de mélanges de ceux-ci, et de 60 % à 94,8 % de motifs structurels d'un monomère non ionique à insaturation monoéthylénique autre que le (méth)acrylate d'alkyle à fonctionnalité hydroxy.

**10.** Composition de polyuréthane à deux composants selon l'une quelconque des revendications 1 à 9, dans laquelle le rapport molaire entre le total des groupes isocyanate et le total des groupes hydroxyle dans la dispersion aqueuse (A) est compris dans une plage allant de 0,8:1 à 2,5:1.

**11.** Composition de polyuréthane à deux composants selon l'une quelconque des revendications 1 à 10, dans laquelle le polyol de polyéther ramifié a une masse moléculaire allant de 4 800 à 15 000 grammes par mole.

**12.** Procédé de préparation de la composition de polyuréthane à deux composants selon l'une quelconque des revendications 1 à 11, comprenant : le mélange de la dispersion aqueuse (A) avec le polyisocyanate (B).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021081732 A
- US 20060155095 A1, Daussin